# EUROPÄISCHE PATENTANMELDUNG

(11) **EP 4 273 772 A2**
(43) Veröffentlichungstag der Anmeldung: **08.11.2023**
(21) Anmeldenummer: 23186493.5
(22) Anmeldetag: 27.06.2014
(51) Int. Cl.: G06Q 10/10

(54) **PLATTFORM-VORRICHTUNG FÜR PASSIV VERBREITETES QUANTITATIVES SCHWARM-WISSEN**

(30) Priorität: 28.11.2013 WO PCT/DE2013/100399
(62) Teilanmeldung aus: 14758479.1
(71) Anmelder: Faulwetter, Patrick, Marina del Rey, CA 90292 (US)
(72) Erfinder: Kersting, Björn, 35619 Braunfels (DE)
(74) Vertreter: Kiessling, Christian

(57) **Zusammenfassung**

Bei einer mit einer Mehrzahl mittels einer Kennung identifizierbarer Nutzer-Teilnehmer vernetzbare webplatzierte Plattform-Vorrichtung (100) zum Sammeln und Bearbeiten von in jeweils mittels einer vorgebbaren Kodierung identifizierbaren, einer Mehrzahl unterschiedlicher Themen zugeordneten Speicherplätzen (110) einer Plattform (100) gespeicherten Informationen seitens der Nutzer-Teilnehmer, wird eine passiv automatisierte Distribution von von Seiten der Nutzer-Teilnehmer gesammelter Information im Wesentlichen dadurch ermöglicht, dass die Speicherplätze (110) auf der Plattform (100) jeweils von einer dualen Einheit (DuU) gebildet sind, wobei eine duale Einheit (DuU) jeweils einen einem vorgebbaren Thema zugeordneten und mit seitens eines Initial-Teilnehmers formulierten Initial-Informationen (114) versehenen, seitens eines einzelnen Nutzer-Teilnehmers nicht editierbaren ersten Speicherplatz (111) sowie einen dem ersten Speicherplatz (111) zugeordneten zweiten Speicherplatz (112) umfasst, der seitens eines jeden einzelnen Nutzer-Teilnehmers editierbar ist und für eine Eingabe von Zusatz-Informationen (113) bezüglich der auf dem ersten Speicherplatz (111) gespeicherten Initial-Information (114) seitens der Mehrzahl von Nutzer-Teilnehmern ausgelegt ist.

## Beschreibung

Die vorliegende Erfindung betrifft eine mit einer Mehrzahl mittels einer Kennung identifizierbarer Nutzer-Teilnehmer vernetzbare web-platzierte Plattform-Vorrichtung zum Sammeln und Bearbeiten von in jeweils mittels einer vorgebbaren Kodierung identifizierbaren, einer Mehrzahl unterschiedlicher Themen zugeordneten Speicherplätzen einer Plattform gespeicherten Informationen seitens der Nutzer-Teilnehmer.

Plattform-Vorrichtungen der eingangs genannten Art sind im Stand der Technik für eine Vielzahl von Anwendungen bekannt. Unter anderem werden sie auch im weltweiten Internet betrieben. Die bekannten Plattform-Vorrichtungen weisen indes den Nachteil auf, dass eine spezielle Auswahl vorgebbarer Verknüpfungen, und dabei nach vorgebbaren Kriterien durchführbare Verknüpfungen nicht realisierbar sind. Die Ursache dafür ist zum einen darin zu sehen, dass die derzeitigen Plattformen Informationen speichern, ohne dass diesen Informationen streng vorgebbare Bearbeitungskriterien und streng vorgebbare Evaluierungskriterien beigemessen werden.

Zum anderen sind die bekannten Plattform-Vorrichtungen nicht effektiv in der Verbreitung von Schwarmwissen

Aufgabe der Erfindung ist es deshalb, eine Plattform-Vorrichtung zu schaffen, mittels derer in einem ersten Speicher gespeicherte Informationen nach streng vorgebbaren Bearbeitungskriterien seitens der Netz-Teilnehmer bewertbar und mit Zusätzen versehbar oder anderweitig änderbar ist und mittels derer eine effektive automatisierte Verbreitung insbesondere von eine qualitative Information darstellendem Schwarmwissen ermöglicht ist.

Für eine Plattform-Vorrichtung der eingangs genannten Art wird diese Aufgabe dadurch gelöst, dass die Speicherplätze auf der Plattform jeweils von einer dualen Einheit (DuU) gebildet sind, wobei eine duale Einheit (DuU) jeweils einen einem vorgebbaren Thema zugeordneten und mit seitens eines Initial-Teilnehmers formulierten Initial-Informationen versehenen, seitens eines einzelnen Nutzer-Teilnehmers nicht editierbaren ersten Speicherplatz sowie einen dem ersten Speicherplatz zugeordneten zweiten Speicherplatz umfasst, der seitens eines jeden einzelnen Nutzer-Teilnehmers editierbar ist und für eine Eingabe von Zusatz-Informationen bezüglich der auf dem ersten Speicherplatz gespeicherten Initial-Information seitens der Mehrzahl von Nutzer-Teilnehmern ausgelegt ist, und wobei bei Erkennen des vorgegebenen Themas seitens einer Web-platzierten Suchmaschine mittels eines als elektronischer Filter ausgelegten Suchbegriffes, der dem vorgegebenen Thema der betreffenden dualen Einheit entspricht, eine Kopiereinrichtung den Inhalt des ersten und den Inhalt des zweiten Speicherplatzes der dualen Einheit kopiert und mittels einer Sendeeinrichtung als Informations-Paket an die Web-platzierte Suchmaschine übermittelt.

Bevorzugte Ausführungsformen der Erfindung sind Gegenstand der Unteransprüche.

Bei der erfindungsgemäßen Plattform-Vorrichtung wird durch die Merkmalskombination, dass die Speicherplätze auf der Plattform jeweils von einer dualen Einheit (DuU) gebildet sind, wobei eine duale Einheit (DuU) jeweils einen einem vorgebbaren Thema zugeordneten und mit seitens eines Initial-Teilnehmers formulierten Initial-Informationen versehenen, seitens eines einzelnen Nutzer-Teilnehmers nicht editierbaren ersten Speicherplatzes sowie einen dem ersten Speicherplatz zugeordneten zweiten Speicherplatz umfasst, der seitens eines jeden einzelnen Nutzer-Teilnehmers editierbar ist und für eine Eingabe von Zusatz-Informationen bezüglich der auf dem ersten Speicherplatz gespeicherten Initial-Information seitens der Mehrzahl von Nutzer-Teilnehmern ausgelegt ist, und wobei bei Erkennen des vorgegebenen Themas seitens einer Web-platzierten Suchmaschine mittels eines als elektronischer Filter ausgelegten Suchbegriffes, der dem vorgegebenen Thema der betreffenden dualen Einheit entspricht, eine Kopiereinrichtung den Inhalt des ersten und den Inhalt des zweiten Speicherplatzes der dualen Einheit kopiert und mittels einer Sendeeinrichtung als Informations-Paket an die Web-platzierte Suchmaschine übermittelt, erreicht, dass über eine Bildung dualer Einheiten Informationen, insbesondere solche, die eine qualitative Information darstellen, bezüglich sehr spezifischer Bearbeitungsvorgaben bearbeitbar, änderbar und dann speicherbar sind, wobei die in Form von Einzelbewertungen, Einzelergänzungen und Einzelkommentaren eingebrachten Informationen eine Form von Schwarmwissen bilden, das mittels streng vorgebbarer Kriterien per passiver automatisierter Übermittlung (DuUfeed) an eine vorherbestimmbare Menge von Nutzer-Teilnehmern übermittelbar ist.

Ziel und Zweck eines von der Mehrzahl der Nutzer-Teilnehmer durchführbaren Bearbeitungsvorgangs ist es dabei zuförderst, eine von einem Initial-Autor unter einem ersten Speicherplatz einer dualen Einheit eingelesene Initial-Information seitens der Nutzer-Teilnehmer bewertbar und bearbeitbar zu machen, um die Initial-Information mit einer Verlässlichkeits-Benotung bzw. Verlässlichkeits-Bewertung zu versehen, die am Ende eines erfindungsgemäß durchgeführten Bearbeitungsvorgangs in den ersten Speicherplatz eingetragen ist und für die Allgemeinheit eine übersichtliche Schwarm-Bewertung seitens der Nutzer-Teilnehmer darstellt.

Gemäß einer ersten bevorzugten Ausführungsform der erfindungsgemäßen Vorrichtung ist vorgesehen, dass in dem editierbaren zweiten Speicherplatz Zusatz-Informationen in Form von quantitativen Bewertungen der auf dem ersten Speicherplatz gespeicherten Informationen seitens der Nutzer-Teilnehmer einschreibbar sind, wobei eine quantitative Bewertung definiert ist als die Menge der seitens der Nutzer-Teilnehmer vorgenommener vorherbestimmt definierter Eingaben in den zweiten Speicherplatz.

Gemäß einer anderen bevorzugten Ausführungsform der erfindungsgemäßen Vorrichtung ist vorgesehen, dass in dem editierbaren zweiten Speicherplatz Zusatz-Informationen in Form von individuellen Bewertungen der auf dem ersten Speicherplatz gespeicherten Informationen seitens der Nutzer-Teilnehmer vornehmbar sind, wobei mindestens eine Additions-Einrichtung zum Zählen der eingegebenen individuellen Bewertungen sowie ein Speicher in dem zweiten Speicherplatz zum Speichern der Anzahl der gezählten individuellen Bewertungen vorgesehen ist, wobei eine individuelle Bewertung seitens der Nutzer-Teilnehmer mittels einer vorherbestimmt definierten Eingabe ausführbar ist, und wobei eine Schwarm-Bewertung definiert ist als die quantitative Menge (Anzahl) der seitens der Nutzer-Teilnehmer vorgenommener vorherbestimmt definierter Eingaben in den zweiten Speicherplatz.

Vorzugsweise ist eine erste Additions-Einrichtung zum Zählen der eingegebenen positiven individuellen Bewertungen sowie ein Speicher zum Speichern dieser Anzahl in dem zweiten Speicherplatz vorgesehen, und eine zweite Additions-Einrichtung zum Zählen der eingegebenen negativen individuellen Bewertungen sowie ein Speicher zum Speichern dieser Anzahl in dem zweiten Speicherplatz vorgesehen, wobei eine individuelle Bewertung seitens der Nutzer-Teilnehmer mittels einer vorherbestimmt definierten Eingabe ausführbar ist, und eine positive Schwarm-Bewertung definiert ist als die Anzahl vorherbestimmt definierter Eingaben in den zweiten Speicherplatz, die einer positiven Bewertung entsprechen, und eine negative Schwarm-Bewertung definiert ist als die Anzahl vorherbestimmt definierter Eingaben in den zweiten Speicherplatz, die einer negativen Bewertung entsprechen.

Gemäß obiger Ausführungsform ist die erste Additions-Einrichtung vorzugsweise vorgesehen, um die auf dem zweiten Speicherplatz gespeicherten positiven Bewertungen zu einer ersten Zahl aufzuaddieren, wobei die zweite Additions-Einrichtung ausgebildet ist, um die auf dem zweiten Speicherplatz gespeicherten negativen Bewertungen zu einer zweiten Zahl aufzuaddieren, und wobei eine erste Divisions-Einrichtung vorgesehen ist, um das Verhältnis aus erster und zweiter Zahl in Form eines Prozentsatzes anzugeben.

Gemäß einer wichtigen bevorzugten Ausführungsform der erfindungsgemäßen Vorrichtung ist vorgesehen, dass eine erste Kopier-Einrichtung vorgesehen ist, die sukzessive hintereinander die innerhalb vorgebbarer Zeitabschnitte auf dem zweiten Speicherplatz gespeicherten Bewertungen als nützliche Informationen interpretiert und auf den ersten Speicherplatz überträgt und die diesbezüglichen vorherigen Informationen auf dem ersten Speicherplatz überschreibt.

Gemäß einer weiteren wichtigen bevorzugten Ausführungsform der erfindungsgemäßen Vorrichtung ist eine Zeitgeber-Einrichtung vorgesehen, die in vorgebbaren konstanten Zeitabschnitten an die erste und zweite Additions-Einrichtung sowie die erste Divisions-Einrichtung und die erste Kopier-Einrichtung Reset-Signale sendet, um die betreffenden Einrichtungen nach Ablauf eines jeweiligen vorgebbaren Zeitabschnittes auf Null zu setzen und die jeweils zugewiesene Funktion in einem jeweils nachgeordneten folgenden Zeitabschnitt gleicher Länge zu wiederholen.

Gemäß einer der obigen Ausführungsform ähnlichen bevorzugten Ausführungsform der erfindungsgemäßen Vorrichtung ist der editierbare zweite Speicherplatz unterteilt in einen Inhalts-Speicherplatz, in den Zusatzinformationen zu den auf dem ersten Speicherplatz gespeicherten Informationen in Form von Ergänzungs-Informationen der auf dem ersten Speicherplatz gespeicherten Informationen einlesbar sind, und einen Bewertungs-Speicherplatz, in den ausschließlich Bewertungen der auf dem zweiten Speicherplatz gespeicherten Ergänzungs-Informationen einlesbar sind, die unterteilt sind in positive Bewertungen der auf dem zweiten Speicherplatz gespeicherten Ergänzungs-Informationen und negative Bewertungen der auf dem zweiten Speicherplatz gespeicherten Ergänzungs-Informationen.

Dabei sind vorzugsweise eine dritte Additions-Einrichtung zum Zählen der eingegebenen positiven individuellen Bewertungen der Ergänzungs-Informationen sowie ein Speicher zum Speichern dieser Anzahl in dem zweiten Speicherplatz vorgesehen, wobei eine vierte Additions-Einrichtung zum Zählen der eingegebenen negativen individuellen Bewertungen der Ergänzungs-Informationen sowie ein Speicher zum Speichern dieser Anzahl in dem zweiten Speicherplatz vorgesehen ist, und wobei eine individuelle Bewertung seitens der Nutzer-Teilnehmer mittels einer vorherbestimmt definierten Eingabe ausführbar ist, und eine positive Schwarm-Bewertung der Ergänzungs-Informationen definiert ist als die Anzahl vorherbestimmt definierter Eingaben in den zweiten Speicherplatz, die einer positiven Bewertung entsprechen, und eine negative Schwarm-Bewertung der Ergänzungs-Informationen definiert ist als die Anzahl vorherbestimmt definierter Eingaben in den zweiten Speicherplatz, die einer negativen Bewertung entsprechen.

Vorzugsweise addiert die dritte Additions-Einrichtung die innerhalb von einer Zeitgeber-Einrichtung vorgebbarer Zeitabschnitte auf dem zweiten Speicherplatz gespeicherten positiven Bewertungen zu einer dritten Zahl auf, und die vierte Additions-Einrichtung addiert dabei die innerhalb der von der Zeitgeber-Einrichtung vorgegebenen Zeitabschnitte auf dem zweiten Speicherplatz gespeicherten negativen Bewertungen zu einer vierten Zahl auf, wobei eine zweite Divisions-Einrichtung vorgesehen ist, um das Verhältnis aus dritter und vierter Zahl in Form eines Prozentsatzes anzugeben.

Vorzugsweise ist ebenfalls eine zweite Kopier-Einrichtung vorgesehen, die bei Ermitteln in einer ersten Entscheider-Einrichtung eines vorherbestimmten Verhältnisses von positiven Bewertungen zu negativen Bewertungen der auf dem zweiten Speicherplatz gespeicherten Ergänzungs-Informationen die auf dem zweiten Speicherplatz gespeicherten Ergänzungs-Informationen als gesicherte Informationen interpretiert auf den ersten Speicherplatz überträgt und die diesbezüglichen vorherigen Informationen auf dem ersten Speicherplatz überschreibt.

Die dritte und vierte Additions-Einrichtung sowie die zweite Divisions-Einrichtung und die zweite Kopier-Einrichtung sind vorzugsweise ausgelegt, um nach Ablauf eines von der Zeitgeber-Einrichtung vorgegebenen Zeitabschnittes vorgegebener Länge die jeweils zugewiesene Funktion in einem jeweils nachgeordneten folgenden Zeitabschnitt gleicher Länge nach Nullsetzung der dritten und vierten Zahl zu wiederholen.

Gemäß einer der obigen Ausführungsform ähnlichen bevorzugten Ausführungsform der erfindungsgemäßen Vorrichtung ist der editierbare zweite Speicherplatz unterteilt in einen Inhalts-Speicherplatz, in den Zusatzinformationen zu den auf dem ersten Speicherplatz gespeicherten Informationen in Form von Korrektur-Informationen der auf dem ersten Speicherplatz gespeicherten Informationen einlesbar sind, und einen Bewertungs-Speicherplatz, in den ausschließlich Bewertungen der auf dem zweiten Speicherplatz gespeicherten Korrektur-Informationen einlesbar sind, die unterteilt sind in positive Bewertungen der auf dem zweiten Speicherplatz gespeicherten Korrektur-Informationen und negative Bewertungen der auf dem zweiten Speicherplatz gespeicherten Korrektur-Informationen.

Dabei ist vorzugsweise eine fünfte Additions-Einrichtung zum Zählen der eingegebenen positiven individuellen Bewertungen der Korrektur-Informationen sowie ein Speicher zum Speichern dieser Anzahl in dem zweiten Speicherplatz vorgesehen, und eine sechste Additions-Einrichtung zum Zählen der eingegebenen negativen individuellen Bewertungen der Korrektur-Informationen sowie ein Speicher zum Speichern dieser Anzahl in dem zweiten Speicherplatz, wobei eine individuelle Bewertung seitens der Nutzer-Teilnehmer mittels einer vorherbestimmt definierten Eingabe ausführbar ist, und eine positive Schwarm-Bewertung der Korrektur-Informationen definiert ist als die Anzahl vorherbestimmt definierter Eingaben in den zweiten Speicherplatz, die einer positiven Bewertung entsprechen, und eine negative Schwarm-Bewertung der Korrektur-Informationen definiert ist als die Anzahl vorherbestimmt definierter Eingaben in den zweiten Speicherplatz, die einer negativen Bewertung entsprechen.

Die fünfte Additions-Einrichtung ist dabei vorzugsweise ausgelegt, um die innerhalb von einer Zeitgeber-Einrichtung vorgebbarer Zeitabschnitte auf dem zweiten Speicherplatz gespeicherten positiven Bewertungen zu einer fünften Zahl aufzuaddieren, wobei die sechste Additions-Einrichtung die innerhalb der von der Zeitgeber-Einrichtung vorgegebenen Zeitabschnitte auf dem zweiten Speicherplatz gespeicherten negativen Bewertungen zu einer sechsten Zahl aufaddiert, und eine dritte Divisions-Einrichtung vorgesehen ist, um das Verhältnis aus fünfter und sechster Zahl in Form eines Prozentsatzes anzugeben.

Des Weiteren ist vorzugsweise eine dritte Kopier-Einrichtung vorgesehen, die bei Ermitteln in einer zweiten Entscheider-Einrichtung eines vorherbestimmten Verhältnisses von positiven Bewertungen zu negativen Bewertungen der auf dem zweiten Speicherplatz gespeicherten Korrektur-Informationen, die auf dem zweiten Speicherplatz gespeicherten Korrektur-Informationen als gesicherte Informationen interpretiert und auf den ersten Speicherplatz überträgt und die diesbezüglichen ursprünglichen Informationen auf dem ersten Speicherplatz überschreibt.

Die fünfte und sechste Additions-Einrichtung sowie die dritte Divisions-Einrichtung und die dritte Kopier-Einrichtung sind vorzugsweise ausgelegt, um nach Ablauf eines von der Zeitgeber-Einrichtung vorgegebenen Zeitabschnittes vorgegebener Länge die jeweils zugewiesene Funktion in einem jeweils nachgeordneten folgenden Zeitabschnitt gleicher Länge nach Nullsetzung der fünften und sechsten Zahl zu wiederholen.

Bei der erfindungsgemäßen Vorrichtung kann eine vorherbestimmt definierte Eingabe im Falle einer positiven individuellen Bewertung beispielsweise durch Eingabe der arabischen Zahl '+1' realisiert sein, und eine vorherbestimmte definierte Eingabe kann im Falle einer negativen individuellen Bewertung beispielsweise durch Eingabe der arabischen Zahl '-1' realisiert sein.

Vorzugsweise ist jedem der Nutzer-Teilnehmer eine Erstplatzierung einer dualen Einheit mit erstem und zweitem Speicherplatz als Initial-Teilnehmer ermöglicht.

Die erfindungsgemäße Vorrichtung wird im Folgenden anhand einer bevorzugten Ausführungsform erläutert, die in den Figuren der Zeichnung dargestellt sind. Es zeigen:
- Fig. 1: eine prinzipielle Ausgestaltung einer dualen Einheit (DuU) entsprechend einer bevorzugten Ausführungsform der Erfindung in Form eines Blockdiagramms;
- Fig. 2: eine zweite Ausführungsform der erfindungsgemäßen Vorrichtung in einer Blockansicht;
- Fig. 3: eine dritte Ausführungsform der erfindungsgemäßen Vorrichtung in einer Blockansicht.

Die erfindungsgemäße web-platzierte Plattform-Vorrichtung 100 ist mit einer Mehrzahl mittels einer Kennung identifizierbarer Nutzer-Teilnehmer vernetzbar und zum Sammeln und Bearbeiten von auf einer Mehrzahl von jeweils mittels einer vorgebbaren Kodierung identifizierbaren und jeweils einem vorgegebenen Thema zugeordneten Speicherplätzen 110 einer Plattform 100 gespeicherten Informationen seitens der Nutzer-Teilnehmer ausgelegt.

Die in eine Vielzahl unterschiedlicher Themen unterteilten Speicherplätze 110 sind auf der Plattform jeweils von einer dualen Einheit (DuU) gebildet, wobei eine duale Einheit (DuU) jeweils einen einem vorgebbaren Thema zugeordneten und mit seitens eines Initial-Teilnehmers formulierten Initial-Informationen 114 versehenen, seitens eines einzelnen Nutzer-Teilnehmers nicht editierbaren ersten Speicherplatz 111 sowie einen dem ersten Speicherplatz 111 zugeordneten zweiten Speicherplatz 112 umfasst, der seitens eines jeden einzelnen Nutzer-Teilnehmers editierbar ist und für eine Eingabe von Zusatz-Informationen 113 bezüglich der auf dem ersten Speicherplatz 111 gespeicherten Initial-Information 114 seitens der Mehrzahl von Nutzer-Teilnehmern ausgelegt ist.

Bei Erkennen des vorgegebenen Themas seitens einer Web-platzierten Suchmaschine 300 mittels eines als elektronischer 310 Filter ausgelegten Suchbegriffes, der dem vorgegebenen Thema der betreffenden dualen Einheit entspricht, kopiert eine Kopiereinrichtung 270 den Inhalt des ersten 111 und den Inhalt des zweiten Speicherplatzes 112 der dualen Einheit und übermittelt diese Inhalte mittels einer Sendeeinrichtung 280 als Informations-Paket an die Web-platzierte Suchmaschine 300.

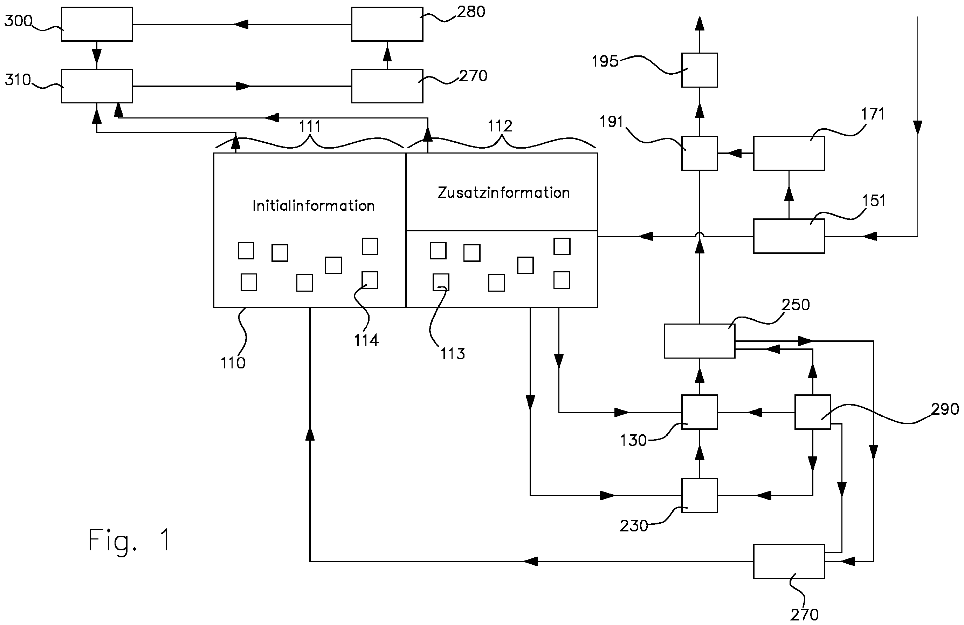

Bei der in Figur 1 dargestellten Ausführungsform der erfindungsgemäßen Vorrichtung sind in dem editierbaren zweiten Speicherplatz 112 Zusatz-Informationen 113 in Form von quantitativen Bewertungen der auf dem ersten Speicherplatz 111 gespeicherten Informationen seitens der Nutzer-Teilnehmer einschreibbar, wobei eine quantitative Bewertung definiert ist als die Menge der seitens der Nutzer-Teilnehmer vorgenommener vorherbestimmt definierter Eingaben in den zweiten Speicherplatz 112.

In dem editierbaren zweiten Speicherplatz 112 sind Zusatz-Informationen 113 in Form von individuellen Bewertungen der auf dem ersten Speicherplatz 111 gespeicherten Informationen seitens der Nutzer-Teilnehmer einlesbar, wobei mindestens eine Additions-Einrichtung 130 zum Zählen der eingegebenen individuellen Bewertungen sowie ein Speicher in dem zweiten Speicherplatz 112 zum Speichern der Anzahl der gezählten individuellen Bewertungen vorgesehen ist, wobei eine individuelle Bewertung seitens der Nutzer-Teilnehmer mittels einer vorherbestimmt definierten Eingabe ausführbar ist, und wobei eine Schwarm-Bewertung definiert ist als die quantitative Menge (Anzahl) der seitens der Nutzer-Teilnehmer vorgenommener vorherbestimmt definierter Eingaben in den zweiten Speicherplatz 112.

Eine erste Additions-Einrichtung 130 ist zum Zählen der eingegebenen positiven individuellen Bewertungen sowie ein Speicher zum Speichern dieser Anzahl in dem zweiten Speicherplatz 112 ausgebildet, und eine zweite Additions-Einrichtung 230 ist zum Zählen der eingegebenen negativen individuellen Bewertungen sowie ein Speicher zum Speichern dieser Anzahl in dem zweiten Speicherplatz 112 ausgebildet, wobei eine individuelle Bewertung seitens der Nutzer-Teilnehmer mittels einer vorherbestimmt definierten Eingabe ausführbar ist, und eine positive Schwarm-Bewertung definiert ist als die Anzahl vorherbestimmt definierter Eingaben in den zweiten Speicherplatz 112, die einer positiven Bewertung entsprechen, und eine negative Schwarm-Bewertung definiert ist als die Anzahl vorherbestimmt definierter Eingaben in den zweiten Speicherplatz 112, die einer negativen Bewertung entsprechen.

Die erste Additions-Einrichtung 130 ist ausgebildet, um die auf dem zweiten Speicherplatz 112 gespeicherten positiven Bewertungen zu einer ersten Zahl aufzuaddieren, und die zweite Additions-Einrichtung 230 ist ausgebildet, um die auf dem zweiten Speicherplatz 112 gespeicherten negativen Bewertungen zu einer zweiten Zahl aufzuaddieren, wobei eine erste Divisions-Einrichtung 250 vorgesehen ist, um das Verhältnis aus erster und zweiter Zahl in Form eines Prozentsatzes anzugeben.

Eine erste Kopier-Einrichtung 270 ist vorgesehen, die sukzessive hintereinander die innerhalb vorgebbarer Zeitabschnitte auf dem zweiten Speicherplatz 112 gespeicherten Bewertungen als nützliche Informationen interpretiert und auf den ersten Speicherplatz 111 überträgt und die diesbezüglichen vorherigen Informationen auf dem ersten Speicherplatz 111 überschreibt.

Eine Zeitgeber-Einrichtung 290 ist vorgesehen, die in vorgebbaren konstanten Zeitabschnitten an die erste und zweite Additions-Einrichtung 130, 230 sowie die erste Divisions-Einrichtung 250 und die erste Kopier-Einrichtung 270 Reset-Signale sendet, um die betreffenden Einrichtungen nach Ablauf eines jeweiligen vorgebbaren Zeitabschnittes auf Null zu setzen und die jeweils zugewiesene Funktion in einem jeweils nachgeordneten folgenden Zeitabschnitt gleicher Länge zu wiederholen.

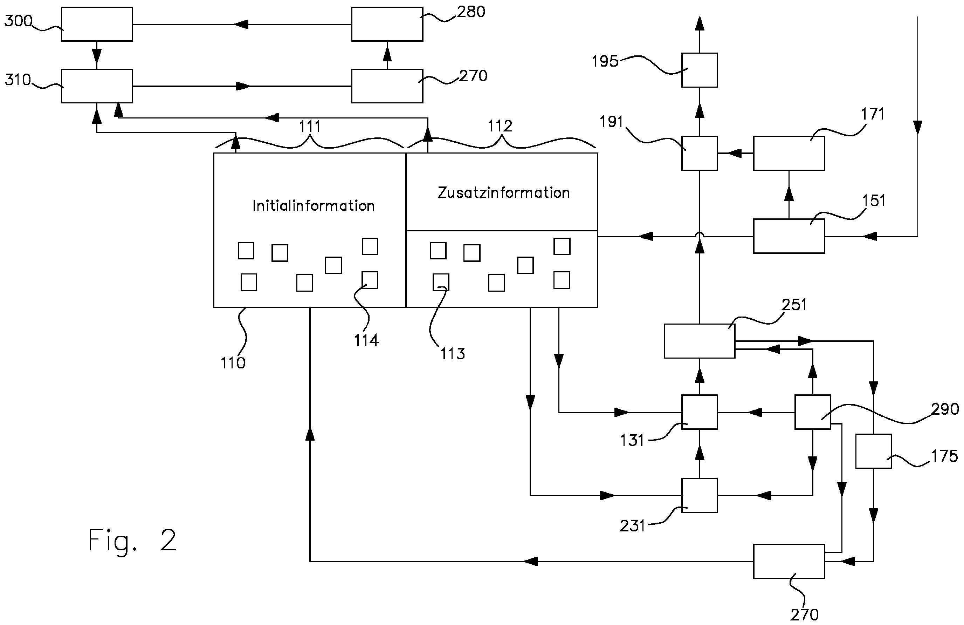

Bei der in Figur 2 dargestellten Ausführungsform der erfindungsgemäßen Vorrichtung 100 ist der editierbare zweite Speicherplatz 112 unterteilt in einen Inhalts-Speicherplatz, in den Zusatzinformationen 113 zu den auf dem ersten Speicherplatz 111 gespeicherten Informationen in Form von Ergänzungs-Informationen der auf dem ersten Speicherplatz 111 gespeicherten Informationen einlesbar sind, und einen Bewertungs-Speicherplatz, in den ausschließlich Bewertungen der auf dem zweiten Speicherplatz 112 gespeicherten Ergänzungs-Informationen einlesbar sind, die unterteilt sind in positive Bewertungen der auf dem zweiten Speicherplatz 112 gespeicherten Ergänzungs-Informationen und negative Bewertungen der auf dem zweiten Speicherplatz 112 gespeicherten Ergänzungs-Informationen.

Eine dritte Additions-Einrichtung 131 ist zum Zählen der eingegebenen positiven individuellen Bewertungen der Ergänzungs-Informationen vorgesehen und des Weiteren ist ein Speicher zum Speichern dieser Anzahl in dem zweiten Speicherplatz 112 vorgesehen, wobei eine vierte Additions-Einrichtung 231 zum Zählen der eingegebenen negativen individuellen Bewertungen der Ergänzungs-Informationen sowie ein Speicher zum Speichern dieser Anzahl in dem zweiten Speicherplatz 112 vorgesehen ist, wobei eine individuelle Bewertung seitens der Nutzer-Teilnehmer mittels einer vorherbestimmt definierten Eingabe ausführbar ist, und eine positive Schwarm-Bewertung der Ergänzungs-Informationen definiert ist als die Anzahl vorherbestimmt definierter Eingaben in den zweiten Speicherplatz 112, die einer positiven Bewertung entsprechen, und eine negative Schwarm-Bewertung der Ergänzungs-Informationen definiert ist als die Anzahl vorherbestimmt definierter Eingaben in den zweiten Speicherplatz 112, die einer negativen Bewertung entsprechen.

Die dritte Additions-Einrichtung 131 addiert die innerhalb von einer Zeitgeber-Einrichtung 290 vorgebbarer Zeitabschnitte auf dem zweiten Speicherplatz 112 gespeicherten positiven Bewertungen zu einer dritten Zahl auf, und die vierte Additions-Einrichtung 231 addiert die innerhalb der von der Zeitgeber-Einrichtung 290 vorgegebenen Zeitabschnitte auf dem zweiten Speicherplatz 112 gespeicherten negativen Bewertungen zu einer vierten Zahl auf, wobei eine zweite Divisions-Einrichtung 251 vorgesehen ist, um das Verhältnis aus dritter und vierter Zahl in Form eines Prozentsatzes anzugeben.

Eine zweite Kopier-Einrichtung 270 ist vorgesehen, die bei Ermitteln in einer ersten Entscheider-Einrichtung 175 eines vorherbestimmten Verhältnisses von positiven Bewertungen zu negativen Bewertungen der auf dem zweiten Speicherplatz 112 gespeicherten Ergänzungs-Informationen die auf dem zweiten Speicherplatz 112 gespeicherten Ergänzungs-Informationen als gesicherte Informationen interpretiert auf den ersten Speicherplatz 111 überträgt.

Die dritte und vierte Additions-Einrichtung 131, 231 sowie die zweite Divisions-Einrichtung 251 und die zweite Kopier-Einrichtung 270 sind ausgelegt, um nach Ablauf eines von der Zeitgeber-Einrichtung 290 vorgegebenen Zeitabschnittes vorgegebener Länge die jeweils zugewiesene Funktion in einem jeweils nachgeordneten folgenden Zeitabschnitt gleicher Länge nach Nullsetzung der dritten und vierten Zahl zu wiederholen.

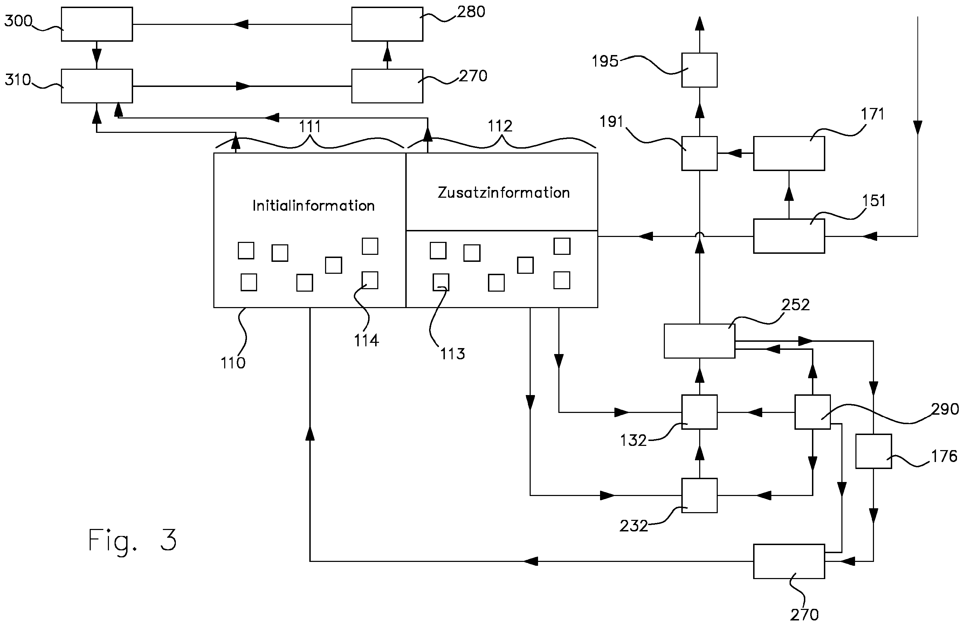

Bei der in Figur 3 dargestellten Ausführungsform der erfindungsgemäßen Vorrichtung ist der editierbare zweite Speicherplatz 112 unterteilt in einen Inhalts-Speicherplatz, in den Zusatzinformationen 113 zu den auf dem ersten Speicherplatz 111 gespeicherten Informationen in Form von Korrektur-Informationen der auf dem ersten Speicherplatz 111 gespeicherten Informationen einlesbar sind, und einen Bewertungs-Speicherplatz, in den ausschließlich Bewertungen der auf dem zweiten Speicherplatz 112 gespeicherten Korrektur-Informationen einlesbar sind, die unterteilt sind in positive Bewertungen der auf dem zweiten Speicherplatz 112 gespeicherten Korrektur-Informationen und negative Bewertungen der auf dem zweiten Speicherplatz 112 gespeicherten Korrektur-Informationen.

Eine fünfte Additions-Einrichtung 132 ist zum Zählen der eingegebenen positiven individuellen Bewertungen der Korrektur-Informationen vorgesehen, und des Weiteren ist ein Speicher zum Speichern dieser Anzahl in dem zweiten Speicherplatz 112 vorgesehen, wobei eine sechste Additions-Einrichtung 232 zum Zählen der eingegebenen negativen individuellen Bewertungen der Korrektur-Informationen sowie ein Speicher zum Speichern dieser Anzahl in dem zweiten Speicherplatz 112 vorgesehen ist, und wobei eine individuelle Bewertung seitens der Nutzer-Teilnehmer mittels einer vorherbestimmt definierten Eingabe ausführbar ist, und eine positive Schwarm-Bewertung der Korrektur-Informationen definiert ist als die Anzahl vorherbestimmt definierter Eingaben in den zweiten Speicherplatz 112, die einer positiven Bewertung entsprechen, und eine negative Schwarm-Bewertung der Korrektur-Informationen definiert ist als die Anzahl vorherbestimmt definierter Eingaben in den zweiten Speicherplatz 112, die einer negativen Bewertung entsprechen.

Die fünfte Additions-Einrichtung 132 addiert die innerhalb von einer Zeitgeber-Einrichtung 290 vorgebbarer Zeitabschnitte auf dem zweiten Speicherplatz 112 gespeicherten positiven Bewertungen zu einer fünften Zahl auf, und die sechste Additions-Einrichtung 232 addiert die innerhalb der von der Zeitgeber-Einrichtung 290 vorgegebenen Zeitabschnitte auf dem zweiten Speicherplatz 112 gespeicherten negativen Bewertungen zu einer sechsten Zahl auf, wobei eine dritte Divisions-Einrichtung 252 vorgesehen ist, um das Verhältnis aus fünfter und sechster Zahl in Form eines Prozentsatzes anzugeben.

Eine dritte Kopier-Einrichtung 270 ist vorgesehen, die bei Ermitteln in einer zweiten Entscheider-Einrichtung 176 eines vorherbestimmten Verhältnisses von positiven Bewertungen zu negativen Bewertungen der auf dem zweiten Speicherplatz 112 gespeicherten Korrektur-Informationen die auf dem zweiten Speicherplatz 112 gespeicherten Korrektur-Informationen als gesicherte Informationen interpretiert und auf den ersten Speicherplatz 111 überträgt und die diesbezüglichen ursprünglichen Informationen auf dem ersten Speicherplatz 111 überschreibt.

Die fünfte und sechste Additions-Einrichtung 132, 232 sowie die dritte Divisions-Einrichtung 252 und die dritte Kopier-Einrichtung 270 sind ausgelegt, um nach Ablauf eines von der Zeitgeber-Einrichtung 290 vorgegebenen Zeitabschnittes vorgegebener Länge die jeweils zugewiesene Funktion in einem jeweils nachgeordneten folgenden Zeitabschnitt gleicher Länge nach Nullsetzung der fünften und sechsten Zahl zu wiederholen.

Bei allen drei oben dargestellten Ausführungen der erfindungsgemäßen Plattform-Vorrichtung 100 ist eine vorherbestimmt definierte Eingabe im Falle einer positiven individuellen Bewertung durch Eingabe der arabischen Zahl '+1' realisiert und eine vorherbestimmt definierte Eingabe ist im Falle einer negativen individuellen Bewertung durch Eingabe der arabischen Zahl '-1' realisiert.

Jedem der Nutzer-Teilnehmer eine Erstplatzierung einer dualen Einheit mit erstem und zweitem Speicherplatz 111, 112 als Initial-Teilnehmer ermöglicht.

Das oben erläuterte Ausführungsbeispiel der Erfindung dient lediglich dem Zweck eines besseren Verständnisses der durch die Ansprüche vorgegebenen erfindungsgemäßen Lehre, die als solche durch das Ausführungsbeispiel nicht eingeschränkt ist.

## Patentansprüche

1. Mit einer Mehrzahl mittels einer Kennung identifizierbarer Nutzer-Teilnehmer vernetzbare web-platzierte Plattform-Vorrichtung (100) zum Sammeln und Bearbeiten von in jeweils mittels einer vorgebbaren Kodierung identifizierbaren, einer Mehrzahl unterschiedlicher Themen zugeordneten Speicherplätzen (110) einer Plattform (100) gespeicherten Informationen seitens der Nutzer-Teilnehmer, **dadurch gekennzeichnet, dass** die Speicherplätze (110) auf der Plattform (100) jeweils von einer dualen Einheit (DuU) gebildet sind, wobei eine duale Einheit (DuU) jeweils einen einem vorgebbaren Thema zugeordneten und mit seitens eines Initial-Teilnehmers formulierten Initial-Informationen (114) versehenen, seitens eines einzelnen Nutzer-Teilnehmers nicht editierbaren ersten Speicherplatz (111) sowie einen dem ersten Speicherplatz (111) zugeordneten zweiten Speicherplatz (112) umfasst, der seitens eines jeden einzelnen Nutzer-Teilnehmers editierbar ist und für eine Eingabe von Zusatz-Informationen (113) bezüglich der auf dem ersten Speicherplatz (111) gespeicherten Initial-Information (114) seitens der Mehrzahl von Nutzer-Teilnehmern ausgelegt ist, und wobei bei Erkennen des vorgegebenen Themas seitens einer Web-platzierte Suchmaschine (300) mittels eines als elektronischer Filter (310) ausgelegten Suchbegriffes, der dem vorgegebenen Thema der betreffenden dualen Einheit entspricht, eine Kopiereinrichtung (270) den Inhalt des ersten Speicherplatzes (111) und den Inhalt des zweiten Speicherplatzes (112) der dualen Einheit kopiert und mittels einer Sendeeinrichtung (280) als Informations-Paket an die Web-platzierte Suchmaschine (300) übermittelt, wobei
- in dem editierbaren zweiten Speicherplatz (112) Zusatz-Informationen (113) in Form von quantitativen Bewertungen der auf dem ersten Speicherplatz (111) gespeicherten Informationen seitens der Nutzer-Teilnehmer einschreibbar sind, wobei eine quantitative Bewertung definiert ist als die Menge der seitens der Nutzer-Teilnehmer vorgenommener vorherbestimmt definierter Eingaben in den zweiten Speicherplatz (112), und
- in dem editierbaren zweiten Speicherplatz (112) Zusatz-Informationen in Form von individuellen Bewertungen der auf dem ersten Speicherplatz (111) gespeicherten Informationen seitens der Nutzer-Teilnehmer vornehmbar sind, wobei mindestens eine Additions-Einrichtung (130) zum Zählen der eingegebenen individuellen Bewertungen sowie ein Speicher in dem zweiten Speicherplatz (112) zum Speichern der Anzahl der gezählten individuellen Bewertungen vorgesehen ist, wobei eine individuelle Bewertung seitens der Nutzer-Teilnehmer mittels einer vorherbestimmt definierten Eingabe ausführbar ist, und wobei eine Schwarm-Bewertung definiert ist als die quantitative Menge (Anzahl) der seitens der Nutzer-Teilnehmer vorgenommener vorherbestimmt definierter Eingaben in den zweiten Speicherplatz (112), wobei
- eine erste Additions-Einrichtung (130) zum Zählen der eingegebenen positiven individuellen Bewertungen sowie ein Speicher zum Speichern dieser Anzahl in dem zweiten Speicherplatz (112) vorgesehen ist, und eine zweite Additions-Einrichtung (230) zum Zählen der eingegebenen negativen individuellen Bewertungen sowie ein Speicher zum Speichern dieser Anzahl in dem zweiten Speicherplatz (112) vorgesehen ist, wobei eine individuelle Bewertung seitens der Nutzer-Teilnehmer mittels einer vorherbestimmt definierten Eingabe ausführbar ist, und eine positive Schwarm-Bewertung definiert ist als die Anzahl vorherbestimmt definierter Eingaben in den zweiten Speicherplatz (112), die einer positiven Bewertung entsprechen, und eine negative Schwarm-Bewertung definiert ist als die Anzahl vorherbestimmt definierter Eingaben in den zweiten Speicherplatz (112), die einer negativen Bewertung entsprechen, und
- eine erste Additions-Einrichtung (130) vorgesehen ist, die die auf dem zweiten Speicherplatz (112) gespeicherten positiven Bewertungen zu einer ersten Zahl aufaddiert und eine zweite Additions-Einrichtung (230) vorgesehen ist, die die auf dem zweiten Speicherplatz (112) gespeicherten negativen Bewertungen zu einer zweiten Zahl aufaddiert, und eine erste Divisions-Einrichtung (250) vorgesehen ist, um das Verhältnis aus erster und zweiter Zahl in Form eines Prozentsatzes anzugeben, wobei
- eine erste Kopier-Einrichtung (270) vorgesehen ist, die sukzessive hintereinander die innerhalb vorgebbarer Zeitabschnitte auf dem zweiten Speicherplatz (112) gespeicherten Bewertungen als nützliche Informationen interpretiert und auf den ersten Speicherplatz (111) überträgt und die diesbezüglichen vorherigen Informationen auf dem ersten Speicherplatz (111) überschreibt, und wobei
- eine Zeitgeber-Einrichtung (290) vorgesehen ist, die in vorgebbaren konstanten Zeitabschnitten an die erste Additions-Einrichtung (130) und zweite Additions-Einrichtung (230) sowie die erste Divisions-Einrichtung (250) und die erste Kopier-Einrichtung (270) Reset-Signale sendet, um die betreffenden Einrichtungen nach Ablauf eines jeweiligen vorgebbaren Zeitabschnittes auf Null zu setzen und die jeweils zugewiesene Funktion in einem jeweils nachgeordneten folgenden Zeitabschnitt gleicher Länge zu wiederholen.

2. Vorrichtung nach Anspruch 1, **dadurch gekennzeichnet, dass** der editierbare zweite Speicherplatz (112) unterteilt ist in einen Inhalts-Speicherplatz, in den Zusatzinformationen (113) zu den auf dem ersten Speicherplatz (111) gespeicherten Informationen in Form von Ergänzungs-Informationen der auf dem ersten Speicherplatz (111) gespeicherten Informationen einlesbar sind, und einen Bewertungs-Speicherplatz, in den ausschließlich Bewertungen der auf dem zweiten Speicherplatz (112) gespeicherten Ergänzungs-Informationen einlesbar sind, die unterteilt sind in positive Bewertungen der auf dem zweiten Speicherplatz (112) gespeicherten Ergänzungs-Informationen und negative Bewertungen der auf dem zweiten Speicherplatz (112) gespeicherten Ergänzungs-Informationen.

3. Vorrichtung nach Anspruch 2, **dadurch gekennzeichnet, dass** eine dritte Additions-Einrichtung (131) zum Zählen der eingegebenen positiven individuellen Bewertungen der Ergänzungs-Informationen sowie ein Speicher zum Speichern dieser Anzahl in dem zweiten Speicherplatz (112) vorgesehen ist, und eine vierte Additions-Einrichtung (231) zum Zählen der eingegebenen negativen individuellen Bewertungen der Ergänzungs-Informationen sowie ein Speicher zum Speichern dieser Anzahl in dem zweiten Speicherplatz (112) vorgesehen ist, wobei eine individuelle Bewertung seitens der Nutzer-Teilnehmer mittels einer vorherbestimmt definierten Eingabe ausführbar ist, und eine positive Schwarm-Bewertung der Ergänzungs-Informationen definiert ist als die Anzahl vorherbestimmt definierter Eingaben in den zweiten Speicherplatz (112), die einer positiven Bewertung entsprechen, und eine negative Schwarm-Bewertung der Ergänzungs-Informationen definiert ist als die Anzahl vorherbestimmt definierter Eingaben in den zweiten Speicherplatz (112), die einer negativen Bewertung entsprechen.

4. Vorrichtung nach Anspruch 3, **dadurch gekennzeichnet, dass** die dritte Additions-Einrichtung (131) die innerhalb von einer Zeitgeber-Einrichtung (290) vorgebbarer Zeitabschnitte auf dem zweiten Speicherplatz (112) gespeicherten positiven Bewertungen zu einer dritten Zahl aufaddiert, und die vierte Additions-Einrichtung (231) die innerhalb der von der Zeitgeber-Einrichtung (290) vorgegebenen Zeitabschnitte auf dem zweiten Speicherplatz (112) gespeicherten negativen Bewertungen zu einer vierten Zahl aufaddiert, und eine zweite Divisions-Einrichtung (251) vorgesehen ist, um das Verhältnis aus dritter und vierter Zahl in Form eines Prozentsatzes anzugeben.

5. Vorrichtung nach Anspruch 4, **dadurch gekennzeichnet, dass** eine zweite Kopier-Einrichtung (270) vorgesehen ist, die bei Ermitteln in einer ersten Entscheider-Einrichtung (175) eines vorherbestimmten Verhältnisses von positiven Bewertungen zu negativen Bewertungen der auf dem zweiten Speicherplatz (112) gespeicherten Ergänzungs-Informationen die auf dem zweiten Speicherplatz (112) gespeicherten Ergänzungs-Informationen als gesicherte Informationen interpretiert auf den ersten Speicherplatz (111) überträgt.

6. Vorrichtung nach den Ansprüchen 4 und 5, **dadurch gekennzeichnet, dass** die dritte Additions-Einrichtung (131) und vierte Additions-Einrichtung (231) sowie die zweite Divisions-Einrichtung (251) und die zweite Kopier-Einrichtung (270) ausgelegt sind, um nach Ablauf eines von der Zeitgeber-Einrichtung (290) vorgegebenen Zeitabschnittes vorgegebener Länge die jeweils zugewiesene Funktion in einem jeweils nachgeordneten folgenden Zeitabschnitt gleicher Länge nach Nullsetzung der dritten und vierten Zahl zu wiederholen.

7. Vorrichtung nach Anspruch 1, **dadurch gekennzeichnet, dass** der editierbare zweite Speicherplatz (112) unterteilt ist in einen Inhalts-Speicherplatz, in den Zusatzinformationen zu den auf dem ersten Speicherplatz (111) gespeicherten Informationen in Form von Korrektur-Informationen der auf dem ersten Speicherplatz (111) gespeicherten Informationen einlesbar sind, und einen Bewertungs-Speicherplatz, in den ausschließlich Bewertungen der auf dem zweiten Speicherplatz (112) gespeicherten Korrektur-Informationen einlesbar sind, die unterteilt sind in positive Bewertungen der auf dem zweiten Speicherplatz (112) gespeicherten Korrektur-Informationen und negative Bewertungen der auf dem zweiten Speicherplatz (112) gespeicherten Korrektur-Informationen.

8. Vorrichtung nach Anspruch 7, **dadurch gekennzeichnet, dass** eine fünfte Additions-Einrichtung (132) zum Zählen der eingegebenen positiven individuellen Bewertungen der Korrektur-Informationen sowie ein Speicher zum Speichern dieser Anzahl in dem zweiten Speicherplatz (112) vorgesehen ist, und eine sechste Additions-Einrichtung (232) zum Zählen der eingegebenen negativen individuellen Bewertungen der Korrektur-Informationen sowie ein Speicher zum Speichern dieser Anzahl in dem zweiten Speicherplatz (112) vorgesehen ist, wobei eine individuelle Bewertung seitens der Nutzer-Teilnehmer mittels einer vorherbestimmt definierten Eingabe ausführbar ist, und eine positive Schwarm-Bewertung der Korrektur-Informationen definiert ist als die Anzahl vorherbestimmt definierter Eingaben in den zweiten Speicherplatz (112), die einer positiven Bewertung entsprechen, und eine negative Schwarm-Bewertung der Korrektur-Informationen definiert ist als die Anzahl vorherbestimmt definierter Eingaben in den zweiten Speicherplatz (112), die einer negativen Bewertung entsprechen.

9. Vorrichtung nach Anspruch 8, **dadurch gekennzeichnet, dass** die fünfte Additions-Einrichtung (132) die innerhalb von einer Zeitgeber-Einrichtung (290) vorgebbarer Zeitabschnitte auf dem zweiten Speicherplatz (112) gespeicherten positiven Bewertungen zu einer fünften Zahl aufaddiert, und die sechste Additions-Einrichtung (232) die innerhalb der von der Zeitgeber-Einrichtung (290) vorgegebenen Zeitabschnitte auf dem zweiten Speicherplatz (112) gespeicherten negativen Bewertungen zu einer sechsten Zahl aufaddiert, und eine dritte Divisions-Einrichtung (252) vorgesehen ist, um das Verhältnis aus fünfter und sechster Zahl in Form eines Prozentsatzes anzugeben.

10. Vorrichtung nach Anspruch 9, **dadurch gekennzeichnet, dass** eine dritte Kopier-Einrichtung (270) vorgesehen ist, die bei Ermitteln in einer zweiten Entscheider-Einrichtung (176) eines vorherbestimmten Verhältnisses von positiven Bewertungen zu negativen Bewertungen der auf dem zweiten Speicherplatz (112) gespeicherten Korrektur-Informationen die auf dem zweiten Speicherplatz (112) gespeicherten Korrektur-Informationen als gesicherte Informationen interpretiert und auf den ersten Speicherplatz (111) überträgt und die diesbezüglichen ursprünglichen Informationen auf dem ersten Speicherplatz (111) überschreibt.

11. Vorrichtung nach den Ansprüchen 9 und 10, **dadurch gekennzeichnet, dass** die fünfte Additions-Einrichtung (132) und sechste Additions-Einrichtung (232) sowie die dritte Divisions-Einrichtung (252) und die dritte Kopier-Einrichtung (270) ausgelegt sind, um nach Ablauf eines von der Zeitgeber-Einrichtung (290) vorgegebenen Zeitabschnittes vorgegebener Länge die jeweils zugewiesene Funktion in einem jeweils nachgeordneten folgenden Zeitabschnitt gleicher Länge nach Nullsetzung der fünften und sechsten Zahl zu wiederholen.

12. Vorrichtung nach einem der vorhergehenden Ansprüchen, **dadurch gekennzeichnet, dass** eine vorherbestimmt definierte Eingabe im Falle einer positiven individuellen Bewertung durch Eingabe der arabischen Zahl '+1' realisiert ist.

13. Vorrichtung nach einem der vorhergehenden Ansprüchen, **dadurch gekennzeichnet, dass** eine vorherbestimmt definierte Eingabe im Falle einer negativen individuellen Bewertung durch Eingabe der arabischen Zahl '-1' realisiert ist.

14. Vorrichtung nach einem der vorhergehenden Ansprüchen, **dadurch gekennzeichnet, dass** jedem der Teilnehmer eine Erstplatzierung einer dualen Einheit mit erstem (111) und zweitem Speicherplatz (112) ermöglicht ist.
